# EUROPEAN PATENT SPECIFICATION

(11) **EP 1 530 222 B1**
(45) Date of publication and mention of the grant of the patent: **14.10.2009**
(21) Application number: 04078050.4
(22) Date of filing: 05.11.2004
(51) Int. Cl.: G21K 1/06, G02B 1/11, G02B 5/18

(54) **Optical element lithographic apparatus such optical element and device manufacturing method**
Optisches Element, lithographische Vorrichtung mit einem solchen und Verfahren zur Herstellung eines Bauteils
Elément optique, dispositif de lithographie le comprénant et procédé de fabrication d'un composant

(30) Priority: 06.11.2003 EP 03078495
(43) Date of publication of application: 11.05.2005
(73) Proprietor: ASML Netherlands B.V., 5504 DR Veldhoven (NL)
(72) Inventor: Bakker, Levinus Pieter, 5708 ZT Helmond (NL)
(74) Representative: Slenders, Petrus J. W.

(56) References cited:
- EP-A- 0 989 443
- PATENT ABSTRACTS OF JAPAN vol. 0050, no. 48 (P-055), 7 April 1981 (1981-04-07) & JP 56 004107 A (CANON INC), 17 January 1981 (1981-01-17)
- PATENT ABSTRACTS OF JAPAN vol. 0176, no. 00 (P-1637), 4 November 1993 (1993-11-04) & JP 05 181093 A (KURARAY CO LTD), 23 July 1993 (1993-07-23)
- GLYTSIS E N ET AL: "ANTIREFLECTION SURFACE STRUCTURE: DIELECTRIC LAYER(S) OVER A HIGH SPATIAL-FREQUENCY SURFACE-RELIEF GRATING ON A LOSSY SUBSTRATE" APPLIED OPTICS, OPTICAL SOCIETY OF AMERICA,WASHINGTON, US, vol. 27, no. 20, 15 October 1988 (1988-10-15), pages 4288-4304, XP000048121 ISSN: 0003-6935
- NAYAK M. ET AL: 'Characterization of molybdenum/silicon X-ray multilayers' NUCLEAR INSTRUMENTS AND METHODS IN PHYSICS RESEARCH B vol. 199, January 2003, pages 128 - 132, XP004403211

## Description

The present invention relates to an optical element, especially an optical element comprising a layer that is at least partially transmissive for radiation with a wavelength λ, the optical element further comprising a top layer comprising a structure having a rms roughness value. Further, the present invention relates to a lithographic apparatus comprising such optical element. The invention also relates to a device manufacturing method.

A lithographic apparatus is a machine that applies a desired pattern onto a target portion of a substrate. Lithographic apparatus can be used, for example, in the manufacture of integrated circuits (ICs). In that circumstance, a patterning means, such as a mask, may be used to generate a circuit pattern corresponding to an individual layer of the IC, and this pattern can be imaged onto a target portion (e.g. comprising part of, one or several dies) on a substrate (e.g. a silicon wafer) that has a layer of radiation-sensitive material (resist). In general, a single substrate will contain a network of adjacent target portions that are successively exposed. Known lithographic apparatus include so-called steppers, in which each target portion is irradiated by exposing an entire pattern onto the target portion in one go, and so-called scanners, in which each target portion is irradiated by scanning the pattern through the projection beam in a given direction (the "scanning"-direction) while synchronously scanning the substrate parallel or anti-parallel to this direction.

In a lithographic apparatus the size of features that can be imaged onto the substrate is limited by the wavelength of the projection radiation. To produce integrated circuits with a higher density of devices, and hence higher operating speeds, it is desirable to be able to image smaller features. Whilst most current lithographic projection apparatus employ ultraviolet light generated by mercury lamps or excimer lasers, it has been proposed to use shorter wavelength radiation, e.g. of around 13 nm. Such radiation is termed extreme ultraviolet (EUV) or soft x-ray, and possible sources include, for instance, laser-produced plasma sources, discharge plasma sources, or synchrotron radiation from electron storage rings.

Some extreme ultraviolet sources, especially plasma sources, emit radiation over a wide range of frequencies, even including infrared (IR), visible, ultraviolet (UV) and deep ultraviolet. These unwanted frequencies will propagate and cause heating problems in the illumination and projection systems and cause unwanted exposure of the resist if not blocked; although the multilayer mirrors of the illumination and projection systems are optimised for reflection of the desired wavelength, e.g. 13 nm, they are optically flat and have quite high reflectivities at IR, visible and UV wavelengths. It is therefore necessary to select from the source a relatively narrow band of frequencies for the projection beam. Even where the source has a relatively narrow emission line, it is necessary to reject radiation out of that line, especially at longer wavelengths. It has been proposed to use a thin membrane as a filter to perform this function. However, such a film is very delicate and becomes very hot, 200-300 °C or more, leading to high thermal stresses and cracking, sublimation and oxidation in the high power levels necessary in a lithographic projection apparatus. A membrane filter also generally absorbs at least 50% of the desired radiation.

EP1197803 describes a lithographic projection apparatus wherein a grating spectral filter is used in the radiation system of the lithographic projection apparatus. This grating spectral filter is designed for passing radiation of desired wavelengths to form a projection beam and for deflecting radiation of undesired wavelengths. The grating spectral filter is substantially formed of a material having a complex refractive index close to unity at the desired wavelengths and comprises silicon protrusions (this structure is 'invisible' for the EUV radiation). The protrusions have a laminar sawtooth profile or a laminar square wave profile (figures 3 and 4 of EP 1197803, respectively). Further, the structures might have a Ru coating creating a rms surface roughness of 1 nm.

A disadvantage of such optical filters with such coatings is that they also reflect a large amount of desired radiation, whereas transmission (through the protrusions) is required. Hence, it is an object of the present invention to provide improved optical elements, like filters, lenses, etc., having a layer that promotes transmission (through at least a part of the optical element) or decreases reflection of desired wavelengths. Such optical elements may be used in a lithographic projection apparatus to select EUV radiation from a wide band source and/or to reject unwanted frequencies, but may also be used in other applications, e.g. in the UV or visible light (VIS).

Hence, it is an object of the invention to provide an optical element, like an optical filter, an optical grating, a mirror, a lens, etc., with a layer that has a decreased reflection of incoming EUV radiation with a wavelength λ in the range of 5-20 nm.

According to the present invention there is provided an optical element, as defined in claim 1.

The advantage of such an optical element is that reflection of radiation (e.g. projected with a certain angle of incidence) on the surface of the optical element, especially on the transmissive top layer, is reduced due to the presence of this transmissive top layer with a structure. Hence, more radiation is transmitted through the transmissive top layer and/or the (partially) transmissive layer of the optical element (see e.g. E. Spiller, Soft Ray Optics, Spie Optical Engineering Press, US, 1994, ISBN 0-8194-1655-x). In this way, more radiation reaches the optical element, and thus, the optical element can e.g. provide an optimised filter function.

In a further embodiment, there is provided an optical element according to the invention, wherein the structure of the transmissive top layer has a rms roughness equal to or smaller than λ for spatial periods larger than λ/2 and equal to or smaller than 1 µm. In yet a further embodiment, there is provided an optical element wherein the at least partially transmissive layer comprises a surface with a structure with a rms roughness value equal to or larger than λ/50 and equal to or smaller than λ for spatial periods larger than about λ/2 and equal to or smaller than about 1 µm, more preferably a structure with a rms roughness value equal to or larger than about λ/50 and equal to or smaller than about λ/2 for spatial periods larger than about λ/2 and equal to or smaller than about 1 µm.

In an embodiment, the transmissive top layer is composed of a material with a relatively low imaginary part of the index of refraction for radiation with wavelength λ in the range of 5-20 nm. For example, for EUV applications, the transmissive top layer comprises a material selected from at least one of Be, B, C, Si, P, S, K, Ca, Sc, Br, Rb, Sr, Y, Zr, Nb, Mo, Ru, Rh, Ag, Ba, La, Ce, Pr, Ir, Au, Pa and U. All these elements have an attenuation length for EUV radiation larger than about 100 nm. Also combinations of materials may be chosen, like B₄C or SiC etc. In a specific embodiment, the invention is directed to an optical element according to the invention, wherein the transmissive top layer comprises one or more materials selected from the group consisting of Be, B, C, Si, Zr, Nb, Mo and Ru. The material of the structure may be different from the material of the transmissive top layer. However, they may also be the same.

In a specific embodiment, the invention comprises an optical element, wherein the transmissive top layer comprises at least Ru. An advantage of using Ru is that it is relatively more stable to oxidation than e.g. Si. In this way, subwavelength roughness is introduced by a relatively stable transmissive top layer comprising the structure. Such transmissive top layer also provides protection of (part of) the optical element, e.g. to oxidation. In a variation, the invention is directed to an optical element, wherein the transmissive top layer and the structure comprise Ru. In EP 1197803, the Ru layer may only provide protection but the presence of this Ru layer in EP 1197803 also enhances reflection. In contrast to EP 1197803, the transmissive top layer comprising the structure according to the invention may both protect and diminish reflection (that may otherwise be generated by such protective layer, as in EP 1197803). Other materials, next to Ru, that may be chosen for the transmissive top layer of the invention and which may provide a relatively chemically inert layer are Au, Rh, Ir, Ag, C, etc.

In a further embodiment, the structure (having a rms roughness value equal to or larger than λ/10) has spatial periods equal to or smaller than λ/2, e.g. λ/5 or smaller. When the spatial period of the structure is below λ/2, then the reflection loss is 'converted' into transmission gain. For EUV radiation of about 13.5 nm, the spatial period may e.g. about 6 nm or smaller, 5 nm or smaller, 2.5 nm or smaller, 2 nm or smaller, or equal to or smaller than about 1 nm. In another embodiment, the transmissive top layer may be a layer wherein the rms value is about λ/5 or larger, or λ/2 or larger, or λ or larger, or 2*λ or larger, e.g. about 2 nm or larger, 2.5 nm or larger, 5 nm or larger, 6 nm or larger, 10 nm or larger, or about 13.5 nm or larger (for EUV radiation of about 13.5 nm) or even larger, e.g. 20 or 50 nm for above mentioned spatial period equal to or smaller than λ/2. Good results for EUV applications may be obtained with rms roughness values between 1.5 and about 50 nm, e.g. 2-20 nm. Further, this rms roughness between about 1.5 and about 50 nm may be selected for spatial periods equal to or smaller than λ/2, e.g. between about 10-2.5 nm (upper values (λ/2)) and about 1.0-4 nm (lower values (λ/5)).

In yet a further embodiment, the structure of the top layer is a structure having a rms roughness value equal to or larger than about λ/10 and equal to or larger than about 4*λ, for spatial periods equal to or smaller than about λ/2. In a preferred embodiment, the structure of the top layer is a structure having a rms roughness value equal to or larger than about λ/10 and equal to or larger than about 4*λ, for spatial periods equal to or smaller than about λ/2 and equal to or larger than about λ/5.

In yet a further embodiment, there is provided an optical element comprising the top layer with a structure, the structure having
- a rms roughness value equal to or larger than about λ/10 and equal to or smaller than about 4*λ, for spatial periods equal to or smaller than about λ/2 and equal to or larger than about λ/5; and
- a rms roughness value equal to or larger than about λ/50 and equal to or smaller than about λ for spatial periods larger than about λ/2 and equal to or smaller than about 1µm.

Spatial periods and rms roughness can be determined by techniques known to the person skilled in the art, like (optical) scattering techniques, STM, AFM, interferometrics, etc.

In an embodiment, the transmissive top layer according to the invention comprises a layer with a layer thickness of up to about 10 nm, or up to about 20 nm, e.g. about 10-20 nm.

In a specific embodiment, the invention is directed to an optical element wherein the at least partially transmissive layer (that is the layer over which the transmissive top layer of the invention is present) has the surface with the structure with a certain roughness. This transmissive layer can e.g. be a lens, can be a layer on a mirror (like a grazing incidence mirror comprising such at least partially transmissive layer, like a Mo layer), or can be a foil, etc. Such transmissive or reflective layers are usually polished or otherwise surfaced, such that a certain (maximum) roughness is obtained. For example, an optical element with a partially transmissive layer with a substantially flat surface may be applied, wherein the substantially flat surfaces of the partially transmissive layer comprises a surface with a structure with a rms roughness value equal to or smaller than λ. The rms roughness may also be equal to or smaller than about λ/2 or equal to or smaller than about λ/5. On top of this substantially flat surface, the transmissive top layer comprising the structure according to the invention is present.

In a specific embodiment, the optical element of the invention may also comprise a layer with transmissive protrusions, e.g. in the case of a reflective mirror, having a mirroring surface, comprising one or more protrusions transmissive for EUV radiation with wavelength λ in the range of 5-20 nm. The transmissive top layer according to the invention with the structure may be present on those protrusions, on the layer or surface between the protrusions or on both protrusion and layer or surface between the protrusions. Due to the presence of this transmissive top layer, less radiation with wavelength λ in the range of 5-20 nm may be reflected and more radiation may be guided to the optical element, e.g. through the transmissive protrusions.

In a further embodiment, the invention is directed to an optical element wherein the optical element comprises a mirror, having a mirroring surface, wherein the mirroring surface comprises one or more protrusions transmissive for EUV radiation with wavelength λ in the range of 5-20 nm, and wherein at least part of the mirroring surface further comprises the transmissive top layer comprising the structure. Such an optical element may be according to European Patent Application Publication EP 1 496 521. In a variation on this embodiment, the invention is directed to an optical element wherein the mirroring surface comprises protrusions comprising a material selected from at least one of Be, B, C, Si, P, S, K, Ca, Sc, Br, Rb, Sr, Y, Zr, Nb, Mo, Ru, Rh, Ag, Ba, La, Ce, Pr, Pa and U.

In a further variation on this embodiment, the invention is directed to an optical element wherein the mirroring surface comprises one or more first protrusions comprising a first material selected from at least one of Be, B, C, P, S, K, Ca, Sc, Br, Rb, Sr, Y, Zr, Nb, Mo, Ru, Rh, Ag, Ba, La, Ce, Pr, Pa and U, and one or more second protrusions comprising a second material selected from at least one of Be, B, C, Si, P, S, K, Ca, Sc, Br, Rb, Sr, Y, Zr, Nb, Mo, Ru, Rh, Ag, Ba, La, Ce, Pr, Pa and U, and wherein the first and second materials are not the same. On top of these first and/or second protrusions, the transmissive top layer according to the invention is present.

In another embodiment, the invention is directed to an optical element with at least one surface comprising a profile having height differences, thereby providing cavities and elevations having a predetermined maximum height difference, wherein the optical element further comprises a substantially flat transmissive layer in the cavities and on the elevations of the optical element, according to European Patent Application Publication EP 1 515 188 and wherein the optical element further comprises the transmissive top layer comprising the structure according to the invention, e.g. on this substantially flat transmissive layer.

According to another aspect of the invention, there is provided a lithographic apparatus comprising one or more optical elements according to the invention. Such lithographic apparatus may comprise:
- a radiation system for supplying a projection beam of radiation;
- a support structure for supporting patterning means, the patterning means serving to pattern the projection beam according to a desired pattern;
- a substrate table for holding a substrate;
- a projection system for projecting the patterned beam onto a target portion of the substrate; and one or more optical elements according to the invention.

In a further aspect of the invention, the invention is directed to a device manufacturing method, wherein an optical element of the invention is used. Such method may e.g. comprise the steps of:
- providing a substrate;
- providing a projection beam of radiation using an illumination system;
- using patterning means to impart the projection beam with a pattern in its cross-section;
- projecting the patterned beam of radiation onto a target portion of the substrate, and
- providing one or more optical elements according to the invention.

According to yet another aspect of the invention there is provided a device which is manufactured according to the method of the invention or with the apparatus according to the invention.

In the context of the invention, "optical element" comprises one or more selected from the group consisting of optical filters, optical gratings, mirrors and lenses. Such optical elements may be flat or curved and may be present as layer, foil, device etc. They may be blazed or optimised, e.g. for radiation with a predetermined wavelength λ in the range of 5-20 nm. They may be transmissive for EUV radiation with wavelengths λ, e.g. in the case of lenses, or reflective, e.g. in case of mirrors, or diffractive, e.g. in the case of gratings. Some optical elements may provide one or more of these optical effects; see e.g. European Patent Application Publications EP 1 496 521 and EP 1 515 188. The optical elements of the invention at least comprise a partially transmissive layer and a transmissive top layer comprising a structure. As will be clear to the person skilled in the art, the optical element may also comprise other layers, features, means, etc. These layers may also be between the partially transmissive layer and a transmissive top layer.

"Transmissive" or "substantially transmissive" in this context means that the transmission through a transmissive layer, e.g. a EUV transmissive layer, is larger than zero, preferably e.g. at least 30%, or at least 50%, at least 70%, at least 80%, e.g. at least 90% or at least 95%, more preferably at least 98%. Alternatively, transmissive may also mean that attenuation through the transmissive layer or (e.g. through a transmissive protrusion) etc. is smaller than about 1/e (0.368). Herein, attenuation length is defined as the length wherein the transmittance has reduced to a value of 1/e, as known to the person skilled in the art.

"Not absorbed" or "substantially not absorbed" in this context means that the absorption of radiation is less than 100%, preferably less than e.g. 70%, or less than 50%, or less than 30%, less than 20%, e.g. less than 10% or less than 5%, more preferably less than 2%.

As will be clear to the person skilled in the art, "transmissive" as well as "not absorbed" does not only depend on the transmission or absorbance of the material, but also on other factors like e.g. layer thickness. For example, due to the fact that the transmissive layer comprising a structure according to the invention may be relatively thin, also relatively less transmissive materials like Ru, Au etc. may be applied (here, transmissive with respect to EUV radiation).

"Undesired radiation" or "undesired wavelength" refers to radiation having wavelengths larger (or smaller) than the wavelength that is intended to be used. For example, when EUV radiation with a wavelength of about 13.5 nm is desired, radiation with a wavelength smaller than about 10 nm or larger than about 20 nm is not desired. This means that the phrase "radiation with wavelength λ in the range of 5-20 nm" is not intended to be limited to radiation with an infinite small bandwidth of λ, as will be clear to the person skilled in the art. An optical element may be designed for one specific wavelength λ or a range of wavelengths. An optical element may also be used at different wavelengths, e.g. due to second order effects, etc.

In the context of the invention, a "structure" is defined as a structure which may be present on a layer or on a surface, or which can be seen as surface, providing height differences. The structure may comprise randomly ordered height differences (random structure) or ordered height differences (e.g. one or two dimensional ordering of the height differences).

In the context of the invention, a "random structure" is defined as a structure which may be present on a layer or on a surface, or which can be seen as surface, and which does not comprise a regular pattern or does not comprise an intended regular pattern or profile. For example, after surfacing, like polishing, there might be found some regularity, but this regularity may not be intentional. In contrast to that, in the case of gratings the protrusions forming the grating profile have an intended regular pattern. A random structure may e.g. be obtained by deposition sputtering or otherwise depositing structures of a certain dimension (e.g. 2, 5 or 10 nm diameter) on a surface. This will appear in a stochastic way. The layer comprising a random structure may e.g. also be obtained by depositing a layer and subsequently sputtering part of the layer away.

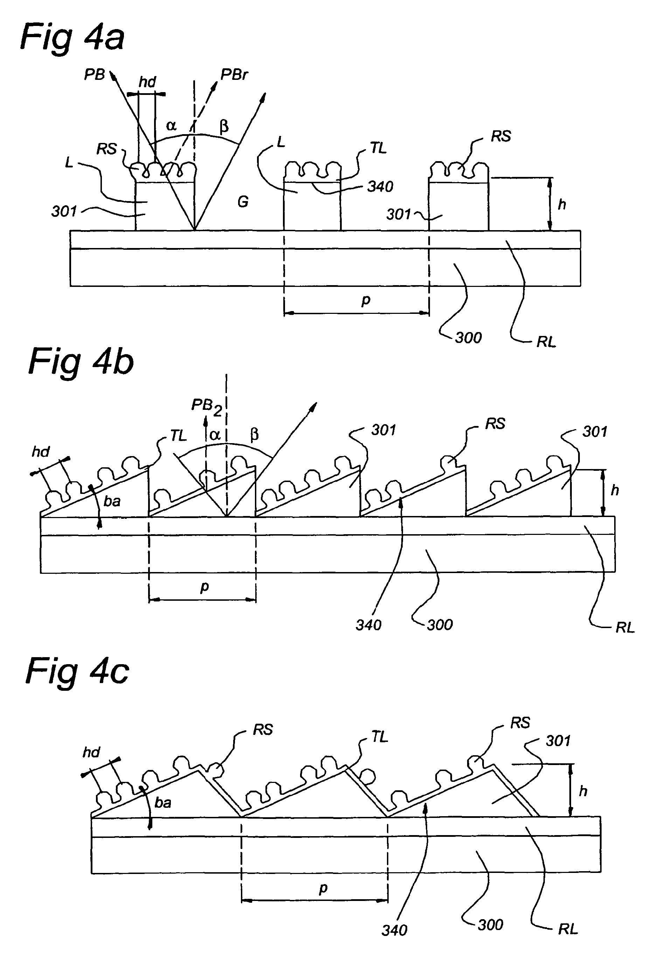

With "layer", the invention describes layers having one or more boundary surfaces with other layers and/or with other media like vacuum (in use). However, "layer" may also mean part of a structure, as known to the person skilled in the art. The term "layer" may also indicate a number of layers. These layers can be next to each other or on top of each other, etc. They may comprise one material or a combination of materials. "Layers" may be continuous or discontinuous layers. For example, protrusions on a surface may also be seen as separate layers or as a discontinuous layer. This means that the layer that is at least partially transmissive for EUV radiation according to the invention may comprise protrusions, as e.g. shown in figures 4-11.

The "transmissive top layer" of the invention comprises the structure, but may also essentially consist of this structure. The transmissive top layer of the invention may be a separate layer, e.g. on protrusions or on a transmissive layer, but may also be part of the at least partially transmissive layer of the optical element. At least part of the transmissive top layer of the invention comprises the structure according to the invention.

In the invention, the "at least partially transmissive layer" of the optical element is a layer that is (substantially) transmissive for desired radiation with wavelength λ in the range of 5-20 nm. "Partly" in this context describes the fact that the layer is not necessarily completely transmissive, e.g. at the boundaries. The transmissiveness of this layer will depend on e.g. wavelength of the radiation and angle of incidence of the beam of radiation, as will be known to the person skilled in the art. This also means that a layer can both be reflective and transmissive. Next to that, depending on e.g. the wavelength, angle of incidence of the beam of radiation and a possible ordering (like e.g. a grating) of this layer, the layer may also have refractive effects. However, when applying an optical element according to the invention, as will be clear to the person skilled in the art, one of these optical effects will mainly be used with respect to radiation with wavelength λ in the range of 5-20 nm, hereby not excluding the possible use of other effects and/or at other wavelengths than at λ. The "at least partially transmissive layer" in this invention can comprise (ordered) protrusions, a layer on and/or between protrusions, a lens, or layer on a lens, etc.

In the invention, "protrusions", which are present on the mirroring surface, are defined as structures extending from the mirroring surface that may comprise a material selected from at least one of Be, B, C, Si, P, S, K, Ca, Sc, Br, Rb, Sr, Y, Zr, Nb, Mo, Ru, Rh, Ag, Ba, La, Ce, Pr, Pa and U. These protrusions may e.g. be made via lithographic techniques. In such a technique, the upper surface is polished to a very good surface roughness and grooves are etched with the lands defined by a photoresist pattern. In this way, a certain profile is obtained, e.g. laminar block or laminar sawtooth. The profile may also be provided by ruling (scratching a line in) a layer of a (first) material with a diamond tool.

These protrusions on a mirroring surface may have a laminar sawtooth profile, wherein the protrusions have a sawtooth profile that is laminarly arranged on a (mirroring) surface. The profile can be arranged to form a (blazed) 1D grating, with a certain number of parallel lines (laminar sawtooth protrusions). The protrusions may also have a laminar square wave profile, wherein the protrusions have a square or rectangle structure, that is laminarly arranged on a (mirroring) surface. The profile can be arranged to form a 1D grating, with a certain number of parallel lines (laminar square wave protrusions).

The protrusions might also be periodically arranged in 2 directions. For example, the protrusions may have periodically structured sawtooth profile, wherein the protrusions can e.g. be cubes or rectangles which have a sawtooth profile in one direction, and which are periodically arranged, like a checkerboard. The profile can be arranged to form a (blazed) 2D grating, with a certain number of periodically arranged structures (periodical sawtooth protrusions). A further embodiment of a periodically arranged profile in 2 directions is a structure with a periodically structured square wave profile, wherein the protrusions can e.g. be cubes or rectangles which are periodically arranged, like a checkerboard. The profile can be arranged to form a (blazed) 2D grating, with a certain number of periodically arranged cubes or rectangles (periodical square wave protrusions). When using such 2D profiles, the protrusions are arranged in a kind of block structure of sawtooth protrusions (free standing periodical sawtooth protrusions) or block protrusions (free standing periodical square wave protrusions; with cubes or rectangles), as known to the person skilled in the art (e.g. US 6469827 or E. Hecht, "Optics", second edition, p. 430 (paragraph 10.2.7)).

In the present invention, calling a protrusion "first" and "second" protrusion is only a method to indicate the different protrusions of different materials. These terms do not imply a certain order.

These protrusions or elevations form a "profile", e.g. regularly (like a grating) and provide on the surface of such optical elements "cavities" (areas which are deeper with respect to adjacent areas), and which can be seen as the area (2D speaking) between protrusions or elevations (areas which are higher with respect to adjacent areas). Usually, the protrusions are flat and have equal heights; also the cavities are usually flat and have equal depths (is thus usually equal to the height of the protrusions). This means that the height of the protrusions is a predetermined maximum height difference. In case the protrusions and cavities are not flat, the maximum height difference between the bottom (surface) of the cavities and the top (surface) of the elevations is the predetermined maximum height. In general: the maximum height difference between (the top surface of) the elevation and (the bottom surface of) the cavity may be determined and is the "predetermined maximum height difference".

In the context of this invention, "first height" means the height in the cavities which is obtained after providing a transmissive layer in the cavities and on the elevations of the optical elements, but before surfacing. Due to a subsequent surfacing procedure, the first height is reduced such that a height in the cavities is obtained that is larger than the predetermined maximum height difference. Further, the term "second height" refers to the height of the transmissive layer, e.g. a EUV transmissive layer, on the elevations that is obtained after surfacing, e.g. polishing.

"Substantially zero" here means that the height of the layer above the protrusions or elevations (second height) may be reduced, within practical limits of surfacing methods, to substantially zero, e.g. a few nanometers or less. Before surfacing the transmissive layer, the transmisive layer in the cavities has a first height. When surfacing, e.g. polishing or etching, the height of the transmissive layer is reduced, and thus the first height is reduced too, such that the second height on the elevations, that is obtained after surfacing, is substantially zero or larger. When the height of the transmissive layer is reduced until the height over the elevations (second height) is substantially zero, the first height is also reduced, resulting in a final height in the cavities that is "substantially equal" to the predetermined maximum height difference. When the layer height in the cavity is substantially equal to the predetermined maximum height difference, there may be a difference of e.g. only a few nanometers or less between these heights.

Here, the phrase "a substantial flat surface in the cavities and over the elevations" describes the situation that a substantial continuous transmissive layer is present on (at least part of) the optical element, thereby providing such layer in the cavities and on the elevations.

In the invention, "material" may also be interpreted as combination of materials. The phrase "material selected from at least one of Be, B, C, Si, P, S, K, Ca, Sc, Br, Rb, Sr, Y, Zr, Nb, Mo, Ru, Rh, Ag, Ba, La, Ce, Pr, Ir, Au, Pa and U", herein also includes materials comprising one or more of these elements, like silicon nitrides like Si₃N₄, boron nitrides like BN, calcium nitrides like Ca₃N₂, etc., as will be understood by the person skilled in the art.

Although specific reference may be made in this text to the use of lithographic apparatus in the manufacture of ICs, it should be understood that the lithographic apparatus described herein may have other applications, such as the manufacture of integrated optical systems, guidance and detection patterns for magnetic domain memories, liquid-crystal displays (LCDs), thin-film magnetic heads, etc. The skilled artisan will appreciate that, in the context of such alternative applications, any use of the terms "wafer" or "die" herein may be considered as synonymous with the more general terms "substrate" or "target portion", respectively. The substrate referred to herein may be processed, before or after exposure, in for example a track (a tool that typically applies a layer of resist to a substrate and develops the exposed resist) or a metrology or inspection tool. Where applicable, the disclosure herein may be applied to such and other substrate processing tools. Further, the substrate may be processed more than once, for example in order to create a multi-layer IC, so that the term substrate used herein may also refer to a substrate that already contains multiple processed layers.

The terms "radiation" and "beam" used herein encompass all types of electromagnetic radiation, including ultraviolet (UV) radiation (e.g. having a wavelength λ of 365, 248, 193, 157 or 126 nm) and extreme ultra-violet (EUV) radiation (e.g. having a wavelength in the range of 5-20 nm), as well as particle beams, such as ion beams or electron beams. Herein, the phrase "in the range of 5-20 nm" refers to radiation having a wavelength between at least part of 5-20 nm. The person skilled in the art will understand that the invention may also be used for radiation having a wavelength in the EUV or soft X-ray outside this range, e.g. about 1 nm or 25 nm and fall within the scope of claims.

The term "patterning means" used herein should be broadly interpreted as referring to means that can be used to impart a projection beam with a pattern in its cross-section such as to create a pattern in a target portion of the substrate. It should be noted that the pattern imparted to the projection beam may not exactly correspond to the desired pattern in the target portion of the substrate. Generally, the pattern imparted to the projection beam will correspond to a particular functional layer in a device being created in the target portion, such as an integrated circuit. Patterning means may be transmissive or reflective. Examples of patterning means include masks, programmable mirror arrays, and programmable LCD panels. Masks are well known in lithography, and include mask types such as binary, alternating phase-shift, and attenuated phase-shift, as well as various hybrid mask types. An example of a programmable mirror array employs a matrix arrangement of small mirrors, each of which can be individually tilted so as to reflect an incoming radiation beam in different directions; in this manner, the reflected beam is patterned.

The support structure supports, i.e. bares the weight of, the patterning means. It holds the patterning means in a way depending on the orientation of the patterning means, the design of the lithographic apparatus, and other conditions, such as for example whether or not the patterning means is held in a vacuum environment. The support can be using mechanical clamping, vacuum, or other clamping techniques, for example electrostatic clamping under vacuum conditions. The support structure may be a frame or a table, for example, which may be fixed or movable as required and which may ensure that the patterning means is at a desired position, for example with respect to the projection system. Any use of the terms "reticle" or "mask" herein may be considered synonymous with the more general term "patterning means".

The term "projection system" used herein should be broadly interpreted as encompassing various types of projection system, including refractive optical systems, reflective optical systems, and catadioptric optical systems, as appropriate for example for the exposure radiation being used, or for other factors such as the use of an immersion fluid or the use of a vacuum. Any use of the term "lens" herein may be considered as synonymous with the more general term "projection system".

The illumination system may also encompass various types of optical components, including refractive, reflective, and catadioptric optical components for directing, shaping, or controlling the projection beam of radiation, and such components may also be referred to below, collectively or singularly, as a "lens".

The lithographic apparatus may be of a type having two (dual stage) or more substrate tables (and/or two or more mask tables). In such "multiple stage" machines the additional tables may be used in parallel, or preparatory steps may be carried out on one or more tables while one or more other tables are being used for exposure.

The lithographic apparatus may also be of a type wherein at least a portion of the substrate may be covered by a liquid having a relatively high refractive index, e.g. water, so as to fill a space between the projection system and the substrate. An immersion liquid may also be applied to other spaces in the lithographic apparatus, for example, between the mask and the projection system. Immersion techniques are well known in the art for increasing the numerical aperture of projection systems. The term "immersion" as used herein does not mean that a structure, such as a substrate, must be submerged in liquid, but rather only means that liquid is located between the projection system and the substrate during exposure.

Embodiments of the invention will now be described, by way of example only, with reference to the accompanying schematic drawings in which corresponding reference symbols indicate corresponding parts, and in which:
- Figure 1 schematically depicts a lithographic apparatus according to an embodiment of the invention;
- Figure 2 schematically shows a side view of an EUV illumination system and projection optics of a lithographic projection apparatus according to Figure 1.
- Figure 3 schematically shows a cross section of a theoretical rough surface.
- Figure 4a schematically shows an optical filter having a mirroring surface (reflective layer) and protrusions in the form of a laminar square wave profile and a transmissive top layer according to an embodiment of the invention.
- Figure 4b schematically shows an optical filter having a mirroring surface (reflective layer) and protrusions in the form of a laminar sawtooth profile and a transmissive top layer according to an embodiment of the invention.
- Figure 4c schematically shows an optical filter having a mirroring surface (reflective layer) and protrusions in the form of a laminar asymmetrical two-sided sawtooth profile and a transmissive top layer according to an embodiment of the invention.
- Figure 5 schematically shows a mirror with on the mirroring surface protrusions in a form of a laminar square wave profile, a substantially flat (EUV) transmissive layer and a transmissive top layer according to an embodiment of the invention.
- Figure 6 schematically depicts a mirror with a tilted multi layer stack and an (EUV) transmissive layer on top of this stack and a transmissive top layer according to an embodiment of the invention.
- Figure 7 schematically shows a mirror with on the mirroring surface protrusions in the form of a laminar sawtooth profile according to an embodiment of the invention.
- Figure 8 schematically shows a mirror with on the mirroring surface protrusions in the form of a laminar square wave profile according to an embodiment of the invention.
- Figure 9 schematically depicts a similar mirror as shown in Figure 4, but wherein the protrusions are arranged in such a way that a part of EUV radiation of a projection beam comprising EUV radiation, only passes one protrusion, according to an embodiment of the invention.
- Figure 10 schematically shows a mirror with on the mirroring surface protrusions in the form of a laminar sawtooth profile of two materials on top of each other, according to an embodiment of the invention.
- Figure 11 schematically shows a mirror with on the mirroring surface protrusions in the form of a laminar square wave profile of two materials next to each other, according to an embodiment of the invention.

### Embodiment 1

In this embodiment, first a lithographic apparatus is described in general, than some characteristics of rough surfaces are described, and next, a mirror with transmissive protrusions having a transmissive top layer comprising the structure according to the invention is described in general.

### Lithographic apparatus in general

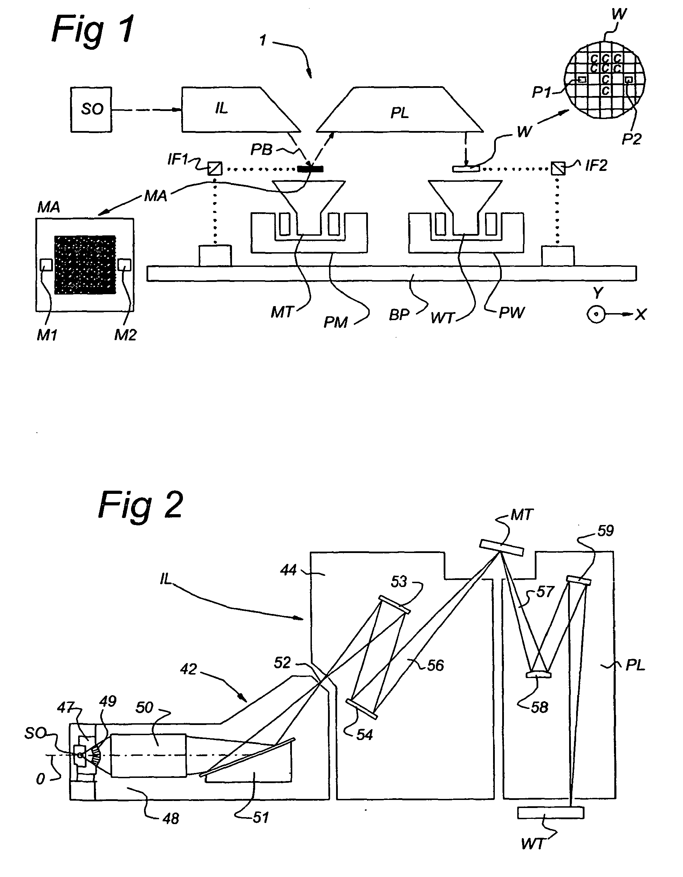

Figure 1 schematically depicts a lithographic apparatus according to a particular embodiment of the invention. The apparatus comprises:
- an illumination system (illuminator) IL for providing a projection beam PB of radiation (e.g. UV or EUV radiation).
- a first support structure (e.g. a mask table) MT for supporting patterning means (e.g. a mask) MA and connected to first positioning means PM for accurately positioning the patterning means with respect to item PL;
- a substrate table (e.g. a wafer table) WT for holding a substrate (e.g. a resist-coated wafer) W and connected to second positioning means PW for accurately positioning the substrate with respect to item PL; and
- a projection system (e.g. a reflective projection lens) PL for imaging a pattern imparted to the projection beam PB by patterning means MA onto a target portion C (e.g. comprising one or more dies) of the substrate W.

As here depicted, the apparatus is of a reflective type (e.g. employing a reflective mask or a programmable mirror array of a type as referred to above). Alternatively, the apparatus may be of a transmissive type (e.g. employing a transmissive mask).

The illuminator IL receives a beam of radiation from a radiation source SO. The source and the lithographic apparatus may be separate entities, for example when the source is a plasma discharge source. In such cases, the source is not considered to form part of the lithographic apparatus and the radiation beam is generally passed from the source SO to the illuminator IL with the aid of a radiation collector comprising for example suitable collecting mirrors and/or a spectral purity filter. In other cases the source may be integral part of the apparatus, for example when the source is a mercury lamp. The source SO and the illuminator IL, may be referred to as a radiation system.

The illuminator IL may comprise adjusting means for adjusting the angular intensity distribution of the beam. Generally, at least the outer and/or inner radial extent (commonly referred to as σ-outer and σ-inner, respectively) of the intensity distribution in a pupil plane of the illuminator can be adjusted. The illuminator provides a conditioned beam of radiation, referred to as the projection beam PB, having a desired uniformity and intensity distribution in its cross-section.

The projection beam PB is incident on the mask MA, which is held on the mask table MT. Being reflected by the mask MA, the projection beam PB passes through the lens PL, which focuses the beam onto a target portion C of the substrate W. With the aid of the second positioning means PW and position sensor IF2 (e.g. an interferometric device), the substrate table WT can be moved accurately, e.g. so as to position different target portions C in the path of the beam PB. Similarly, the first positioning means PM and position sensor IF1 can be used to accurately position the mask MA with respect to the path of the beam PB, e.g. after mechanical retrieval from a mask library, or during a scan. In general, movement of the object tables MT and WT will be realized with the aid of a long-stroke module (coarse positioning) and a short-stroke module (fine positioning), which form part of the positioning means PM and PW. However, in the case of a stepper (as opposed to a scanner) the mask table MT may be connected to a short stroke actuator only, or may be fixed. Mask MA and substrate W may be aligned using mask alignment marks M1, M2 and substrate alignment marks P1, P2.

The depicted apparatus can be used in the following preferred modes:
1. In step mode, the mask table MT and the substrate table WT are kept essentially stationary, while an entire pattern imparted to the projection beam is projected onto a target portion C in one go (i.e. a single static exposure). The substrate table WT is then shifted in the X and/or Y direction so that a different target portion C can be exposed. In step mode, the maximum size of the exposure field limits the size of the target portion C imaged in a single static exposure.
2. In scan mode, the mask table MT and the substrate table WT are scanned synchronously while a pattern imparted to the projection beam is projected onto a target portion C (i.e. a single dynamic exposure). The velocity and direction of the substrate table WT relative to the mask table MT is determined by the (de-)magnification and image reversal characteristics of the projection system PL. In scan mode, the maximum size of the exposure field limits the width (in the non-scanning direction) of the target portion in a single dynamic exposure, whereas the length of the scanning motion determines the height (in the scanning direction) of the target portion.
3. In another mode, the mask table MT is kept essentially stationary holding a programmable patterning means, and the substrate table WT is moved or scanned while a pattern imparted to the projection beam is projected onto a target portion C. In this mode, generally a pulsed radiation source is employed and the programmable patterning means is updated as required after each movement of the substrate table WT or in between successive radiation pulses during a scan. This mode of operation can be readily applied to maskless lithography that utilizes programmable patterning means, such as a programmable mirror array of a type as referred to above.

Combinations and/or variations on the above described modes of use or entirely different modes of use may also be employed.

Figure 2 shows the projection apparatus 1 in more detail, comprising a radiation system 42, an illumination optics unit 44, and the projection optics system PL. The radiation system 42 comprises the radiation source SO which may be formed by a discharge plasma. EUV radiation may be produced by a gas or vapor, such as Xe gas or Li vapor in which a very hot plasma is created to emit radiation in the EUV range of the electromagnetic spectrum. The very hot plasma is created by causing a partially ionized plasma of an electrical discharge to collapse onto an optical axis O. Partial pressures of e.g. 10 Pa of Xe or Li vapor or any other suitable gas or vapor may be required for efficient generation of the radiation. The radiation emitted by radiation source SO is passed from a source chamber 47 into a collector chamber 48 via a gas barrier structure or contamination trap 49. The gas barrier structure 49 comprises a channel structure such as, for instance, described in detail in European patent application EP-A-1- 057 079 and EP-A-1223468, which are incorporated herein by reference.

The collector chamber 48 comprises a radiation collector 50 which may be formed by a grazing incidence collector. Radiation passed by collector 50 is reflected off a grating spectral filter 51 to be focused in a virtual source point 52 at an aperture in the collector chamber 48. From collector chamber 48, a projection beam 56 is reflected in illumination optics unit 44 via normal incidence reflectors 53, 54 onto a reticle or mask positioned on reticle or mask table MT. A patterned beam 57 is formed which is imaged in projection optics system PL via reflective elements 58, 59 onto wafer stage or substrate table WT. More elements than shown may generally be present in illumination optics unit 44 and projection system PL.

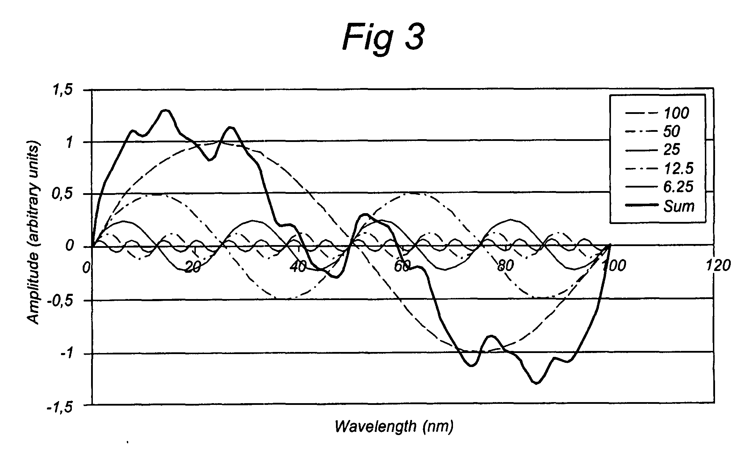

Radiation collectors 50 are known from the prior art. One example of a radiation collector that may be used in the present invention is, e.g., described in patent application EP 1394612. (See especially figures 3, 4 and 5).

### Characteristics of rough surfaces

Now having generally described a lithographic apparatus, a few general notes are made on roughness of surfaces.

A rough surface generally comprises a structure, thereby providing a height profile. This structure comprises smaller structures, thereby providing height differences. The height profile of such a surface may be characterised with techniques known in the art. The height profile can be defined as the difference of the local height with respect to the average height of the profile. Since structures on rough surfaces may be randomly positioned, it is not necessary to define the fully detailed height profile, i.e. it is not necessary to know the height of the profile at every position. A set of numbers describing the key features of the structure will do. A convenient set of numbers is the root mean square (rms) roughness value of the height for a set of characteristic lengths over the surface. This is illustrated in figure 3, wherein in a schematic cross section of a rough surface profile (irregularly curved thick line) is depicted. In this figure, 5 sine functions are plotted which are comprised in the rough surface profile. The structures in the profile appear as randomly ordered. It is clear that the long wavelength sine is still dominant in this profile.

In figure 3, the relative amplitude of the sine functions is chosen to be proportional to the wavelength. Table 1 sums up these relative numbers:

**Table 1: the wavelengths and amplitudes of the sine waves in figure 3:**

| **Spatial period (nm)** | **Amplitude (a.u.)** |
|---|---|
| 100 | 1 |
| 50 | 0.5 |
| 25 | 0.25 |
| 12.5 | 0.125 |
| 6.25 | 0.0625 |

The sine wave with the longest wavelength describes the relatively slow variation of the height. Furthermore, the shorter the wavelength of the sine wave, the faster the variation of the height it describes is. The structure of figure 3 may be repeated a number of periods, thereby providing a kind of regular structure, with the desired rms roughness according to the invention.

The profile in figure 3 can thus be characterised by the 5 sets of numbers (Fourier analysis of the profile) given in table 1. Note that in this case, the numbers in table 1 completely define the profile in figure 3. In general, this is not the case, since more than the e.g. 5 wavelengths are needed for the decomposition. The amplitude of the sine wave as a function of the wavelength is called 'power spectral density' in literature. The wavelength is also called 'spatial period'. Another term that is frequently used is 'spatial frequency', this frequency is equal to 1 over the spatial period. Fourier analysis of the structure or height profile of a rough surface provides the power spectral density of the height profile.

The amplitudes of the sine waves, along with their spatial periods are enough to characterise the height profile of the structure. Therefore, in order to characterise the height profile of this structure, we decompose it into a set of sine waves with properly chosen spatial periods. The corresponding amplitudes then characterise the structure. In literature, roughness is frequently characterised using the root mean square value of the sine wave, i.e. ½√2 times the amplitude of the wave.

The spatial period (i.e. the wavelength) of the roughness is an important quantity for optical components. For e.g. EUV mirrors, roughness with spatial frequencies smaller than 1 mm⁻¹ (i.e. spatial periods larger than 1 mm) may result in problems with the image quality as resolution and distortion. Mid-spatial frequency roughness (1-10⁻³ mm⁻¹, i.e. spatial periods between 1 µm and 1 mm) results in flare, and high spatial frequency roughness (10⁻³-mm⁻¹, i.e. spatial periods larger than 1 µm) appears to result in reflection loss. Hence, the physical effect of roughness depends heavily on the spatial frequency of the roughness. Note that for real surfaces, the roughness is characterised or specified over a range of spatial periods, since a single spatial period does not describe the whole effect of roughness. This also means that the rms values are calculated using not a single sine wave, but a superposition of sine waves with spatial periods in a certain (bound) range.

The invention is based on the fact that a surface with very fine roughness, i.e. with spatial periods (wavelengths) smaller than about half of the wavelength of the incident light, may not produce, or produces less, scattered light, and the loss in reflectivity may be (partially) compensated by an increase in the transmission.

For example, when used in EUV lithography, the wavelength of the light may be 13.5 nm. Thus the spatial period of the roughness may be lower than about 6.75 nm. In order to have approximately all the light transmitted through the structure, significant rms roughness is required. For example, at 15 degrees angle of incidence on a Ru structure, an 8 nm rms roughness results in approximately 36% reflection loss, i.e. more than about 36% of the incident light is transmitted (see also embodiment 6). A higher roughness may result in an even higher transmission. Roughness with spatial periods larger than about 6.75 nm will result in more scattering, and hence more loss of desired radiation.

### Mirrors with transmissive protrusions having a transmissive top layer comprising the structure according to the invention

One or more of the mirrors of figure 2, e.g. the optical filter on position 11 of figure 2, can be an optical element, as depicted in Figure 4a, comprising a mirror or optical filter 300, having a mirroring surface or reflective layer RL, wherein the mirroring surface comprises one or more protrusions 301 (substantially) transmissive for EUV radiation with a wavelength λ in the range of 5-20 nm (see also European Patent application EP 1 496 521-A-), and wherein the mirroring surface further comprises transmissive top layer TL comprising structure RS according to the invention.

Such an optical filter or mirror 300 can e.g. have a protrusion profile with a laminar square wave profile, Figure 4a, with a laminar sawtooth structure, as in Figure 4b, or with a kind of laminar asymmetrical two-sided sawtooth profile, as in Figure 4c, etc.

Figure 4a schematically shows an optical filter or mirror 300, having a reflective layer or mirroring surface RL, wherein this surface is provided with a kind of laminar square wave profile. This square wave profile is formed by protrusions 301 (G, groove; L, land) which have a period or pitch p of e.g. a value between 500 - 5000 nm, a height h (e.g. 12-20 nm). On the protrusions 301 (on surface 340), which are regularly arranged, a transparent top layer TL is found, with, on this layer or in this layer or as part of the layer TL, a randomly arranged structure RS. Distances hd between the structures comprised in structure RS and the heights and diameters thereof might vary over the transparent layer TL and over the protrusions 301 of optical filter or mirror 300 (comparable to the structure shown in Figure 3) thereby providing the transmissive top layer TL with structure RS.

In this embodiment, structure RS may have a rms roughness value equal to or larger than λ/10 (about 1.5 nm) for spatial periods equal to or smaller than λ/2 (about e.g. 6.75 nm or less for EUV radiation). However, the spatial periods might also be smaller, e.g. 3 or 1 nm, and the rms value might e.g. about 5 or 10 nm. Generally, a higher rms value for these spatial periods leads to a better result, since the reflection loss at the surface (at constant wavelength and under the same angle of incidence of the radiation) decreases with an increasing root mean square roughness.

By way of example, this is shown in figure 4a and 4b. A projection beam PB, having an angle of incidence α with mirror 300 travels through the transmissive top layer TL, comprising structure RS, reaches mirroring surface RL and is reflected back with an angle β. Note that in the drawing no account is taken of possible diffraction or refraction. Angle α may be smaller or larger than drawn in this figure. Angle α may be equal to angle β, but may also be different, depending on the indices of refraction of the materials of RS, TL, protrusions 301 and the medium over mirror 300.

Part of the radiation of projection beam PB may be reflected at the surface of the protrusion, which is shown by reflected beam PBr. Due to the presence of the transmissive top layer TL with structure RS according to the invention, this reflection PBr is advantageously minimised and more radiation of projection beam PB having the desired wavelength λ in the range of 5-20 nm reaches reflective layer RL. In case this top layer TL having structure RS according to the invention would not have been present, more radiation, having desired wavelengths λ, would have been reflected, leading to loss of energy. In this way, desired radiation may be more effectively reflected, whereas radiation having not desired wavelengths may be absorbed, refracted and/or diffracted by protrusions 301. Hence, by providing this transmissive top layer TL having structure RS according to the invention, a better optical filter may be provided. When structure RS according to the invention would not have been present, also more radiation might have been reflected, e.g. by the transmissive and/or protective layer TL without such structure according to the invention, as is e.g. the case in EP1197803.

In figure 4a, no transparent layer or top coat TL comprising structure RS is depicted on the vertical sides of the protrusions 301 or on the surface RL in between protrusion 301. Neither has this been done in figure 4b on the sides opposite of the angle ba. However, these variations of this embodiment, as shown in Figures 4a-c, also comprises the situation in which these sides or surfaces comprise a transparent top layer TL according to the invention (as e.g. shown in figure 4c). Nevertheless, these sides or surfaces do not necessarily also comprise structure RS.

The transmissive top layer may be provided by e.g. a CVD process. After creating a smooth top layer TL, e.g. of about 2.5 nm, the CVD process may be followed by a 'rough' deposition of larger particles (e.g. about 5-10 nm), thereby creating structures RS in and on the transmissive top layer. The materials that are used during these two steps of the CVD process might be different, but may also be the same. The fact that sputtering by ions changes the roughness of a layer is well-known in literature. Furthermore, sputter deposition and evaporation deposition techniques result in a certain roughness of a sample, depending on the deposition settings. Polishing of a layer can also be used, depending on the required roughness, the grain of the polishing material (fluid with particles) can be chosen. With e.g. optical methods, the obtained roughness can be evaluated. After this deposition, optionally a second CVD process might be applied, to form a thin layer (not depicted in Figures 4a-c) on the transmissive top layer TL with structure RS. This layer may comprise the same material as the transmissive layer TL and/or structure RS. For example, in a variation transmissive layer TL and structure RS comprise Ru, and in another variation, transmissive layer TL provided by first and second CVD process comprise Si and structure RS comprise Si.

In this embodiment and its variations, the at least partially transmissive layer, having a surface with the structure with a rms roughness value equal to or smaller than λ (e.g. after polishing), are the protrusions 301 and their surfaces 340. On the sides of the protrusions (extending from the at least partially transmissive layer, in Figures 4a-c reflective layer RL), and when applicable on the surface of reflective layer RL between the protrusions, the groove G, the transparent top TL layer may also be present (see above).

A structure RS is depicted in the Figures 4a-c (and 5 and 6) as spheres with same sizes. However, the structure may have different particle sizes; shapes, etc., for e.g. a size distribution ranging from about 0 to 20 nm, e.g. about 1-10 nm, like 2 or 5 nm. The transmissive top layer may have a layer thickness up to about 20, e.g. about 1-10).

In embodiment 7, some variations on mirror 300 with protrusions 301 (not subject of this invention) are described, which are independent of the transmissive top layer TL comprising a structure RS according to the invention.

### Embodiment 2

This embodiment describes an optical element with at least one surface comprising a profile having height differences, thereby providing cavities and elevations having a predetermined maximum height difference, wherein the optical element comprises a substantially flat transmissive layer in the cavities and on the elevations of the optical element according to European Patent application Publication EP 1 515 188 , and wherein the optical element further comprises the transmissive top layer comprising the structure according to the invention.

First, this embodiment is described in general (independent of the transmissive top layer TL according to the invention), and subsequently, this top layer TL and its function are discussed.
The mirror with the grating structure in this embodiment is described as EUV optical element, but this embodiment is not limited to EUV applications.

### Mirror with a grating structure having a flat transmissive layer in general

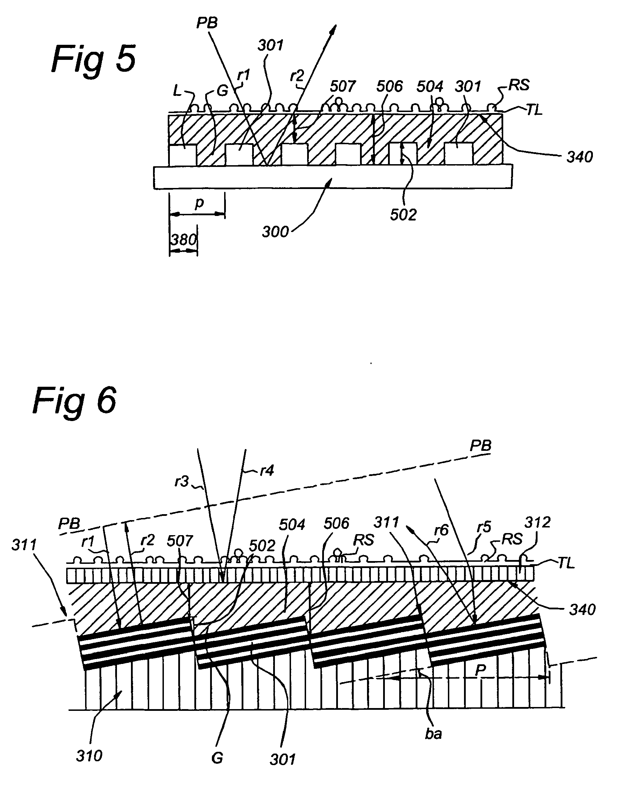

By way of example, this embodiment is schematically depicted in Figure 5, wherein a mirror 300 is shown having protrusions 301, wherein the protrusions form a laminar square wave profile. The protrusions have a period p, a length 380, and a height 502. Height 502 is the predetermined maximum height (since all protrusions 301 have the same height). Reference L refers to "land" and reference G refers to "groove". The protrusions 301 comprise for example EUV absorbers like Cr or TaN, or a Si/Mo multilayer. However, also a transmissive materials like Zr, creating a phase difference, can be used. The protrusions 301 have a height 502 and the cavities or grooves G are, according to the invention, filled with an EUV transmissive layer 504 with height 506. The height of the EUV transmissive layer above the elevations or protrusions 301 is indicated with reference 507 (second height).

EUV transmissive layer 504, as shown in Figure 5, can for example be provided by chemical vapour deposition of an EUV transmissive material, like Si. After providing this layer in the cavities and on the elevations, the EUV transmissive layer is polished, such that an EUV transmissive layer is obtained with height 507 above the elevations or protrusions 301, or height 506 above the cavities or grooves G.

Here, the at least partially transmissive layer (having a surface with a structure) is this EUV transmissive layer 504 (e.g. after surfacing). The roughness of this layer, e.g. after surfacing, may have a rms roughness value equal to or smaller than λ, e.g. λ/2 or equal to or smaller than λ/5.

The mirror according to Figure 5 can for example be used as grating, wherein the grating is used to select the desired wavelength and the EUV transmissive layer provides on the one hand a protective layer which can easily be cleaned, and also provides on the other hand an optical filter function by transmitting EUV radiation and absorbing (part of the) non-EUV radiation. The EUV transmissive layer 504 may comprise a material selected from at least one of Be, B, C, Si, P, S, K, Ca, Sc, Br, Rb, Sr, Y, Zr, Nb, Mo, Ru, Rh, Ag, Ba, La, Ce, Pr, Pa and U. The EUV transmissive layer 504 may also comprise a combination of two or more of these materials. The person skilled in the art can choose the appropriate materials for the EUV transmissive layer 504 and the protrusions 301.

In an alternative arrangement, the EUV transmissive layer 504 comprises a material with a complex index of refraction close to unity, like Si. By choosing such a material for the EUV transmissive layer 504, a redesign of the grating is not necessary, since the EUV transmissive layer 504 is invisible for the EUV radiation (see also above). The EUV radiation of projection beam PB may travel substantially undisturbed through EUV transmissive layer 504, since this layer is substantially transmissive for EUV radiation, and in case of Si also has a complex index of refraction close to unity. This is shown by way of example in Figure 5, where ray r1 of projection beam PB travels through the EUV transmissive layer and is reflected at the mirror 300 into ray r2, without being refracted. In case materials or combinations of materials are chosen that have a complex index of refraction not close to unity, rays r1 and r2 may be refracted, which may mean that a redesigned grating structure has to be used.

Figure 5 describes a mirror with a grating structure having a laminar square wave profile. However, this embodiment may alternatively relate to a mirror with a sawtooth profile having an EUV transmissive layer, as well as 2D gratings having such an EUV transmissive layer, as will be understood by the person skilled in the art.

The grating shown in Figure 5, or other gratings which are comprised in this embodiment, may for example be present as mirror on position 53, 54, 57 or 58 of the lithographic projection apparatus of figure 2.

### Mirror with a grating structure having a flat transmissive layer and having a transmissive top layer comprising the structure according to the invention

Now having described the mirror with a grating structure having a flat transmissive layer in general, the transmissive top layer comprising structure RS on top of the optical element is described.

On top of the flat transmissive layer 504, Figure 5 shows the transmisive top layer TL according to the invention. Here, the transmissive top layer TL comprises structure RS. A projection beam PB, with ray r1 travels through the transmissive top layer TL comprising structure RS and is reflected at the mirror 300 into ray r2. When the transmissive top layer TL with structure RS would not have been present, ray r1 of projection beam PB may have been partially reflected at the surface 340 (interface of the atmosphere (usually vacuum in case of EUV) above the optical element and the surface of the flat transmissive layer 504), instead of entering the transmissive layer 504. Now, due to the presence of the transmissive top layer TL with structure RS according to the invention, reflection is reduced and the optical element of Figure 5 can better provide its filter function (optical filtering of undesired wavelengths in favour of desired wavelength λ in the range of 5-20 nm). When the structures RS according to the invention would not have been present, also more radiation might have been reflected, e.g. by a transmissive and/or protective layer TL without such structure RS. Especially this embodiment provides the possibility to create structure RS by polishing (see above).

### Embodiment 3

This embodiment describes a blazed grating as a mirror with a mirroring surface, with a tilted multi-layer stack which is tilted with respect to the mirroring surface (e.g. with a plurality of tilted multi-layer stacks which are tilted with respect to the mirroring surface) and an EUV transmissive layer on top of this stack, according to European Patent application EP 1 515 188-A-. Such a mirror provides at least one surface comprising a profile having height differences, thereby providing cavities and elevations having a predetermined maximum height difference, wherein the optical element comprises a substantially flat transmissive layer in the cavities and on the elevations of the optical element. First, this embodiment is described in general (independent of the transmissive top layer according to the invention), and subsequently, this top layer and its function are discussed.

The blazed grating as a mirror with a tilted multi layer stack and an EUV transmissive layer on top of this stack in this embodiment is described as EUV optical element, but this embodiment is not limited to EUV applications.

### Mirror with a tilted multi layer stack and an EUV transmissive layer on top of this stack in general

This embodiment describes a blazed grating as a mirror with a tilted multi layer stack and an EUV transmissive layer on top of this stack, see Figure 6. Tilted multi layer mirrors (without the EUV transmissive layer), and their production are known from the art, see for example Seely et al. Applied Optics 40, vol. 31, page 5565 (2001).

In this figure, the multi layer surface is tilted, and a kind of tilted stack structure of multi layers is created, with protrusions 301 of multi layers (e.g. Si and Mo multi layers, as known in the art), with period p, and blaze angle ba. The tilted multi layer stack of protrusions 301 may be present on, for example, a substrate or holder 310. The protrusions or elevations 301 of multi layers form elevations with varying heights. Hence, the maximum height of a protrusions is indicated by elevation top 311. Further, cavities or grooves G are present. Here, the height difference between (the bottom of) the cavity G and the top 311 of protrusions 301 is height 502 (predetermined maximum height difference).

Over the cavities G and protrusions or elevations 301, an EUV transmissive layer 504 is present. The height of this EUV transmissive layer 504 is indicated by reference 507, calculated from elevation top 311, or height 506, calculated from the bottom of cavities or grooves G.

When desired, an extra layer 312 may be present, for example to provide an extra protection or an extra optical filter function. This extra layer 312 is not only applicable in this embodiment, but may also be applied in the previous embodiments. Such layer may e.g. comprise Ru.

The EUV transmissive layer 504, e.g. of Si, can be provided by for example chemical vapour deposition, thereby providing an EUV transmissive layer 504 with a height larger than 502, followed by a surfacing (e.g. polishing) procedure. In this way a multi layer mirror is provided which can reflect EUV radiation, and which may deflect, reflect and/or absorb non-EUV radiation. For example ray r1, which is radiation having an EUV wavelength (e.g. 13.5 mm, desired radiation) of projection beam PB, propagates undisturbed or substantially undisturbed through optional layer 312 and EUV transmissive layer 504 and is reflected on protrusion 301 of the tilted multi layer stack into ray r2. The person skilled in the art, taking into account diffraction of the radiation from the projection beam PB by the grating (not depicted in Figure 6), can choose the angle of incidence with which the projection beam reaches the surface of this tilted multi layer and/or the angle ba, thereby determining the direction in which ray r2 is reflected.

Radiation having other wavelengths than EUV wavelengths, e.g. VIS, or IR, is reflected at the surface of optional layer 312 (this reflection is not shown), or reflected at the surface of the EUV transmissive layer 504. This is shown in Figure 6 with reference r3, describing a ray with a non-EUV wavelength which is reflected at the surface of the EUV transmissive layer 504 as ray r4.

Part or all of the radiation may also be transmitted through optional layer 312, or through EUV transmissive layer 504, or through both layers. However, due to the differences of index of refraction between the materials (including vacuum) on both sides of the interfaces, ray r5, being a ray of projection beam PB having a non-EUV wavelength, is refracted. Due to this refraction, rays r5 and r6 (ray r5 reflected at a multi layer stack protrusion 301) are refracted as indicated in Figure 6.

Since the EUV transmissive layer 504 is transmissive for radiation having EUV wavelengths, but is substantially not transmissive for radiation having non-EUV wavelengths, also part of the radiation having non-EUV wavelength may be absorbed. As a result of the reflection, refraction and absorption, radiation having non-EUV wavelengths is diminished in the direction in which radiation having EUV wavelength (r2) is reflected (diffraction is not taken into account in the schematic drawing of Figure 6). In this way, an optical filter is obtained with a substantially flat surface, having the advantage of being easily cleaned and the advantage of providing an optical filter for EUV radiation (e.g. 13.5 mm).

The person skilled in the art will understand that generally (this also applies to embodiment 2), in case there would be a range of predetermined maximum height differences 502, then the predetermined maximum height difference would be the height difference 502 between the deepest cavity and highest elevation or protrusion 301. Further, the person skilled in the art will understand that in such case a layer height 507 of the EUV transmissive layer on the elevations larger than zero (after surfacing), will generally be defined with respect to (the top 311 of) the highest elevation or protrusion 301, thereby providing a flat EUV transmissive layer over the protrusions and cavities.

The person skilled in the art will be able to apply the invention also to curved optical elements, the optical elements having a profile having height differences on curved surfaces, like curved mirrors or curved mirrors with grating structures, thereby taking into account that the transmissive layer will generally have the same curvature.

### Mirror with a tilted multi layer stack and an EUV transmissive layer on top of this stack and having a transmissive top layer comprising the structure according to the invention

Now having described the mirror with a tilted multi layer stack and an EUV transmissive layer on top of this stack in general, the transmissive top layer comprising structure RS on top of the optical element is described.

Here, figure 6 shows a variation wherein the transmissive top layer TL is drawn on top of layer 312. However, layer 312 may also be absent, such that the transmissive top layer TL is on top of the flat transmissive layer 504 (like in Figure 5), i.e. on surface 340 of transmissive layer 504. In another variation of this embodiment, layer 312 may also be used as transmissive top layer TL, after providing this layer with structure RS, e.g. by surfacing techniques or CVD techniques, etc. Also this embodiment provides the possibility to create structure RS by polishing (see above).

Over the flat transmissive layer 504, Figure 6 shows the transmisive top layer TL according to the invention. Here, the transmissive top layer TL comprises structure RS. A projection beam PB, with ray r1, travels through the transmissive top layer TL, comprising structure RS and is reflected (and/or refracted; not taken into account in this figure) at mirror 300 into ray r2. When the transmissive top layer TL with structure RS would not have been present, ray r1 of projection beam PB may have been reflected at the interface of the atmosphere above the optical element and the surface of the layer 312, instead of entering the transmissive layer 504. Now, due to the presence of the transmissive top layer TL with structure RS according to the invention, reflection is reduced and the optical element of Figure 6 can better provide its filter function (optical filtering of undesired wavelengths in favour of desired wavelength λ). Further, due to the presence of the structure, also less radiation may be reflected at transmissive layer TL.

### Embodiment 4

Embodiment 4 (not depicted), describes the optical elements of embodiment 2 or 3, with the exception that surface 340 of transmissive layer 504 has been treated by e.g. a surfacing technique, e.g. polishing, etching, etc., techniques known to the person skilled in the art, such that structure RS is formed. In this way, transmissive layer 504 comprises transmissive top layer TL and structure RS according to the invention.

### Embodiment 5

Embodiment 5 (not depicted), describes the optical elements of embodiment 2, 3 or 4, with the exception that a specific combination of materials has been chosen: transmissive layer 504 substantially comprises Si and transmissive top layer TL with structure RS substantially comprises Ru.

### Embodiment 6

This embodiment describes the dependence of the reflection and transmission of a top layer according to the invention with a rms roughness value of 8 nm and spatial periods equal to or smaller than λ/2 as function of the angle of incidence for two different materials for EUV radiation of 13.5 nm:

**Table 2: Example of reflection and transmission of a top layer according to the invention**

| **Angle of incidence** | **Material** | **Reflection** | **Transmission** |
|---|---|---|---|
| 10 | Ru | 0.62 | 0.26 |
| 15 | Ru | 0.45 | 0.36 |
| 20 | Ru | 0.27 | 0.43 |
| 5 | Au | 0.5 | 0.33 |
| 10 | Au | 0.23 | 0.44 |
| 15 | Au | 0.09 | 0.43 |

When the spatial period is larger than about λ/2, less transmission is obtained.

For example, assuming a rms roughness of about 8 nm and a radiation beam with radiation having a wavelength of 13.5 nm, impinging on the surface having the structure according to the invention with an rms roughness of about 8 nm, reflection will be about 45%. In case the rms roughness of 8 nm is found for a spatial period equal to or smaller than λ/2, then transmission is about 36% and scattering (reflection in random directions) is negligible. However, when the rms roughness of 8 nm is found for a spatial period larger than λ/2, but smaller than about 1 µm, the transmission is negligible and 36 % is scattered. Hence, the invention provides transmission gain due to the structure according to the invention.

### Embodiment 7

This embodiment does not describe the transmissive top layer TL comprising structure RS according to the invention, but describes some specific variations of the mirror (not subject of this invention), which comprises this transmissive top layer TL according to embodiment 1. These variations relate to embodiments of European Patent application no. 03077155, which is incorporated by reference. On the surface, or on part of the surface of the mirrors, filters and/or gratings described in embodiment 7, transmissive layer TL comprising structure RS according to the invention may be provided, thereby providing the advantages of this layer to the mirrors, filters and/or grating.

### Embodiment 7, variations A

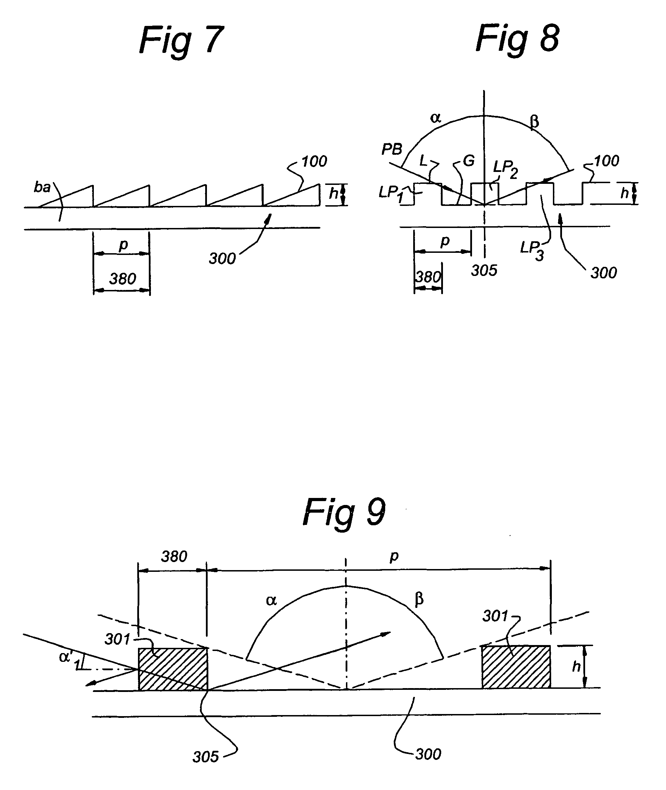

An embodiment of the mirror of the invention is shown in Figure 7, wherein a kind of laminar sawtooth profile is shown, and wherein the protrusions have a period p, a length 380, a height h, and an angle ba. Figure 8 depicts another embodiment with a protrusion profile having a laminar square wave profile, wherein the protrusions have a period p, a length 380, and a height h. Reference L refers to "land" and reference G refers to "groove". The protrusions are arranged on a mirroring surface of mirror 300.

The advantage of such a mirror or an apparatus comprising such mirror is that when EUV radiation is reflected by the mirror 300, e.g. under a certain angle, only the desired EUV radiation is reflected in this angle, whereas undesired radiation, for example IR radiation, is absorbed by above mentioned materials and/or is deflected or refracted in other directions. By way of example, this is illustrated in figure 8. The projection beam PB, having an angle of incidence α hits the surface of a protrusion LP1 (laminar protrusion 1). Part of the light might be reflected (not shown) and part of the light, or all light might enter the protrusion. Since the protrusion is transmissive for EUV radiation, this radiation propagates unabsorbed or substantially unabsorbed, whereas radiation with undesired wavelengths like UV or IR is substantially absorbed. The beam may further propagate to the next protrusion (second protrusion), indicated with laminar protrusion LP2. Reaching the (left) surface of this protrusion LP2, part of the radiation might again be reflected (not shown), and part of the radiation will propagate through protrusion LP2. Also this protrusion LP2 will discriminate between EUV radiation and radiation with other wavelengths. When the projection beam PB reaches the surface of the mirror 300 (e.g. a multilayer mirror) at position 305, the projection beam PB is reflected with an angle β (β may be α in case of specular reflection on the surface of mirror 300). The projection beam PB may propagate further through protrusions LP2 and LP3. In this way, the projection beam PB will comprise a higher EUV/non-EUV radiation ratio after reflection by the mirror of the invention than before the incidence on the mirror. What has been illustrated in Figure 8 with respect to the propagation of the projection beam PB may also apply for Figure 7, where instead of laminar protrusions forming a laminar square wave profile like in Figure 8, a laminar sawtooth profile is used.

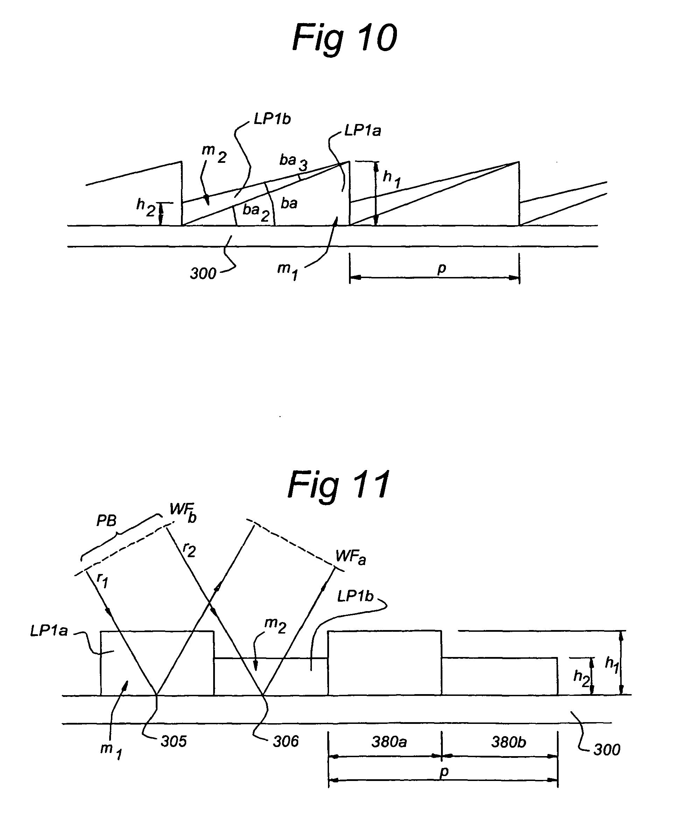

Note that refraction of the projection beam PB is not depicted in Figures 7 and 8 (and later Figures 9 and 11). The above-mentioned ratio may further be improved by using a blazed or optimised grating. The mirror with the above-mentioned protrusions can, even when it is optimised or blazed at e.g. UV wavelengths, block undesired wavelengths (like IR), but transmit EUV radiation, since Be, B, C, Si, P, S, K, Ca, Sc, Br, Rb, Sr, Y, Zr, Nb, Mo, Ru, Rh, Ag, Ba, La, Ce, Pr, Pa and U are substantially transmissive for EUV radiation, but substantially not for radiation having other wavelengths than EUV radiation. Next to that, all these materials, including Si, have an absorption length longer than 100 nm for 13.5 nm. The protrusions can also comprise combinations of materials, like e.g. B₄C or SiC. The protrusions on mirror 300 of this embodiment are mainly present as optical filter that is transmissive for EUV radiation, and a possible grating or diffractive structure, is substantially transmissive for the EUV radiation of the projection beam PB. However, due to the difference in indices of refraction when the EUV radiation enters and leaves the protrusion, there may be some diffractive losses of the EUV radiation of the projection beam PB.

### Embodiment 7, variations B

In another variation, the protrusions are arranged in such a way that a part of EUV radiation of a projection beam comprising EUV radiation, having an angle of incidence between 0 and 90°, only passes one protrusion, see Figure 9, or substantially every part of the projection beam PB passes only one protrusion.

The profile (which might be diffractive and optimised at e.g. about 13.5 nm or other EUV wavelengths) is constructed such that the desired radiation comprised in radiation beam PB only passes one period p of the profile and is reflected at the mirror or mirror surface 300 at e.g. position 305. The angle of incidence of the projection beam PB with mirror 300 is indicated with reference α, whereas the angle of incidence of the projection beam PB with a side surface of a protrusion is shown as α'₁. The angle of incidence α'₁ may remain small to minimise reflection of the projection beam PB. Also, the upper surface of the protrusions of the profile can be angled, as in a blazed grating, so that the reflection of the undesired radiation (e.g. with wavelengths higher than EUV, e.g. UV VIS and IR) on the protrusion surface is directed in a different direction than the desired radiation. The length 380 and height h of the protrusions, the period p in which the protrusions are arranged, as well as the angle of incidence α, may be chosen such that the projection beam PB only passes one protrusion.

The profile on the mirror can be produced by ruling (scratching a line) with a diamond tool. It is also possible to produce the profile by ion etching of a sinusoidal structure. Producing a block profile on a grazing incidence-mirror using lithographic techniques, with subsequent ion etching is also a viable option. The profile as shown in Figure 9 is given as an example; other profiles are also possible, provided that EUV radiation is substantially not absorbed (i.e. is substantially transmissive), and diffraction of EUV radiation is small (e.g. less than about 30 % is diffracted).
Figure 9 shows by way of example a laminar square wave profile. However, this embodiment also comprises the configuration wherein a laminar sawtooth profile is used, or wherein a periodically structured sawtooth profile or periodically structured square wave profile is used.

In case a laminar sawtooth profile is used, the length 380 and height h of the protrusions, the period p in which the protrusions are arranged, and the angle ba, as well as the angle of incidence α may be chosen such that the projection beam PB only passes one protrusion.

Similarly this applies to the periodically structured profiles, however in such embodiment the period p comprises two periods, since a 2D structure is formed.

This embodiment may also comprise a profile wherein the protrusions have a length 380 that is smaller than half a period p (this is shown in Figure 9 for the laminar arranged square wave profile but this may also apply for a sawtooth profile and for 2D profiles).

### Embodiment 7, variations C

In the variations above, a lithographic apparatus was described in general, and mirrors comprising one or more protrusions comprising a material selected from at least one of Be, B, C, Si, P, S, K, Ca, Sc, Br, Rb, Sr, Y, Zr, Nb, Mo, Ru, Rh, Ag, Ba, La, Ce, Pr, Pa and U were described. In embodiment 4, a mirror is described comprising at least 2 different protrusions comprising two or more different materials, as will be explained with reference to Figures 10 and 11.

In this embodiment, a mirror 300 comprising one or more first protrusions LP1a and LP1b comprising a first material ml selected from at least one of Be, B, C, P, S, K, Ca, Sc, Br, Rb, Sr, Y, Zr, Nb, Mo, Ru, Rh, Ag, Ba, La, Ce, Pr, Pa and U (protrusion LP1a), and comprising one or more second protrusions comprising a second material m2 selected from at least one of Be, B, C, Si, P, S, K, Ca, Sc, Br, Rb, Sr, Y, Zr, Nb, Mo, Ru, Rh, Ag, Ba, La, Ce, Pr, Pa and U (protrusion LP1b) is presented, and wherein the first and second materials are not the same, e.g. Si and Mo, Mo and Zr, C and Si, Be and Zr, etc. In another example, ml is Be or Zr, and m2 is Si₃N₄ or SiO₂. When desired, also more materials than m1 and m2, and/or more protrusions than the first and second protrusions can be applied on a mirror 300. In Figure 10 a configuration of this embodiment is shown in more detail. It depicts a laminar sawtooth profile on mirror 300. In contrast to the sawtooth profiles shown in Figure 7, the laminar sawtooth profile here comprises structures of two materials, The structure has a height h1, and comprises a first protrusion LP1a of a first material m1, with a blaze angle ba2 and a height h1, and a second protrusion LP1 b of a second material m2 with a height h2 and with an angle ba3. These protrusions (of two or more materials) form together one protrusion or structure with a blaze angle ba. The protrusions may form a regular structure with period p.

The protrusions on mirror 300, as shown in Figure 10 may form a grating that may be blazed at EUV wavelengths, but in another variation of this embodiment they may also be blazed at other wavelengths, e.g. UV, VIS or IR wavelengths.

The blaze angle ba can be chosen in such a way that undesired radiation is deflected from the direction of the desired radiation, see above. The blaze angle ba depends on angle ba2 of material m1 of the protrusion LP1a (first protrusions), of an angle ba3 of material m2 of the protrusion LP1b (second protrusion), and of heights h1 and h2 of the protrusions LP1a and LP1b, which are in this case on top of each other.

As an alternative to the blazed profile, a laminar profile of the type shown in Figure 11 may be used. As shown in Figure 11 the laminar profile has a square wave surface profile with the constant p, equal to one period p of the laminar sawtooth profile shown in Figure 10. The protrusions are located next to another in an alternating sequence and have different heights, viz. protrusion LP1a of material m1 has height h1, and protrusion LP1b of material m2 has height h2. The lengths of the protrusions are shown in this figure by reference 380a for protrusion LP1a (first protrusion) of material m1 and by reference 380b for protrusion LP1b (second protrusion) of material m2. In Figure 11 lengths 380a and 380b are the same and the length of both when added is equal to period p.

By selecting the materials based on their index of refraction, heights h1 and h2, and when applicable lengths 380a and 380b or the angles ba, ba2 and ba3, distance (period p) of the first and second protrusions, and a certain angle of incidence of the projection beam on the mirror, a mirror can be obtained that reflects at a certain angle the desired radiation while correcting by the different materials the optical path length difference, such that it does not vary over the mirroring surface, whereas light of undesired wavelengths is absorbed and/or deflected at other angles.

By way of example this is shown in Figure 11. Here, a ray r1 of projection beam PB enters a first P1a protrusion of material m1 and may substantially be transmitted through this protrusion and reflected at the mirror or mirror surface 300 on position 305. After being reflected, ray r1 leaves the protrusion. Ray r2, also comprised in projection beam PB, enters a first protrusion LP1b of material m2 and is reflected at position 306 at the mirror or on the mirror surface 300. Without the presence of this second protrusion LP1b, the optical path length (through the first and second protrusion and vacuum) is different for different rays. To compensate for this difference in optical path length, the second protrusion P1b of material m2 is present. This material m2 has another index of refraction. By choosing the appropriate dimensions of the protrusions and an angle of incidence, as mentioned above, the second protrusion LP1b of material m2 can compensate for the optical path difference for the (different rays in the) projection beam PB, thereby providing an optical path length difference that does not vary over the mirroring surface. This means that the optical path length difference is zero or an integer times the wavelength. The vacuum above the protrusions should also be taken into account for the determination of the optical path length (difference). In this way, the optical path lengths, i.e. pathlength times the indices of refraction are for rays r1 and r2, starting from wave front WF_{b}, before entering protrusions LP1a and LP1b, to wave front WFₐ, after the protrusions LP1a and LP1b, are the same or the difference between the optical path lengths for rays r1 and r2 is an integer times the wavelength (e.g. 13.5 nm radiation). Hence, in this embodiment an optical path length difference is created for EUV radiation that does not vary over the mirroring surface.

For Si, having an index of refraction that is near unity for EUV radiation, the presence of such compensating second protrusions might be less necessary. However, when applying one of the other materials, the presence of the second protrusion LP1b might be especially beneficial. Nevertheless, also Si may create a small optical pathlength difference between the different rays (like shown for r1 and r2 in Figure 11) within a projection beam PB, that might be compensated by the presence of second protrusions LP1b of Be, B, C, P, S, K, Ca, Sc, Br, Rb, Sr, Y, Zr, Nb, Mo, Ru, Rh, Ag, Ba, La, Ce, Pr, Pa and U

This embodiment also comprises a mirror having a mirroring surface (e.g. in a lithographic apparatus), wherein the protrusions are arranged in such a way that a part of EUV radiation of a projection beam comprising EUV radiation, having an angle of incidence between 0 and 90°, only passes in one period p one first protrusion LP1a (of material m1) and one second protrusion LP1b (of material m2). This means that the length of the protrusions 380a and 380b is smaller than the period p.

This embodiment also comprises a mirror wherein the profile of protrusions forms a grating, that is blazed (sawtooth) or optimised (square wave) at the desired radiation, e.g. 13.5 nm or another wavelength. Profiles of these types on mirrors may have a 1D or 2D character. Since these protrusions are transparent to EUV radiation, the desired wavelengths are reflected by the mirror 300, and the undesired wavelengths of the radiation are absorbed, refracted and/or deflected.

In general, this embodiment describes a mirror, having at least one mirroring surface 300, wherein the mirroring surface 300 comprises one or more protrusions P1a comprising a first material m1 (first protrusions), and comprising one or more protrusions LP1b comprising a second material m2 (second protrusions), and wherein the first and second materials are not the same. Such a mirror 300 can be used as an optical filter, when the materials that are used are transparent for the desired wavelength, or optimised to be transparent for the desired wavelengths. Other wavelengths, not desired wavelengths, may be absorbed by the materials, and when a grating for a certain wavelength is chosen (grating or blazed grating), the undesired wavelengths might also be (partially) deflected.

This embodiment also comprises a lithographic apparatus (see e.g. embodiment 1) comprising the mirror as described in this embodiment.

For providing the above described structures, the blazed structure may be provided by ruling a layer of material m1 with a diamond tool, depositing material m2, and ruling with a diamond tool for a second time. For the square shaped structures, a lithographic process may be used.

### Embodiment 8

Embodiment 8 (not depicted), describes the optical element of embodiment 1, with the exception that a specific combination of materials has been chosen: protrusions 301 substantially comprise Si and the transmissive top layer TL with structure RS according to the invention substantially comprises Ru.

### Embodiment 9

Embodiment 9 (not depicted), describes an optical element, comprising a mirror, e.g. a grazing incidence mirror, normal incidence mirror, multilayer mirror, having a protective coating. The protective coating comprises a transmissive top layer TL comprising structure RS according to the invention. Hereby, a protective coating is provided with enhanced transmission, with respect to a protective layer without such structure RS.

### Embodiment 10

In the table below, rms values for structures of the transmissive top layer are given for different wavelengths: 5,13.5 and 20 nm. The transmissive top layer with these rms roughness values may be present on the optical elements of the invention, as described above in a number of embodiments. Depending upon the application and the methods used to provide to transmissive top layer and its structure, the person skilled in the art can choose rms roughnesses in the ranges as described below.

Further in the table, a variation on this embodiment is provided. For example, using a wavelength of about 13.5 nm, one may provide a rms roughness equal to or larger than about 1.4 nm and equal to or smaller than about 54 nm for spatial periods equal to or larger than about 2.7 nm and equal to and smaller than about 6.75 nm. The person skilled in the art may also provide smaller rms roughnesses than 54 nm. E.g., in a variation, one may provide a rms roughness equal to or larger than about 2.7 nm and equal to or smaller than about 27 nm for spatial periods equal to or larger than about 2.7 nm and equal to and smaller than about 6.75 nm.

**Table 3: rms roughness values for 5, 13.5 and 20 nm for different spatial periods according to an embodiment of the invention:**

| **λ** | **5.0** | **nm** | | | | **λ** | **5.0** | **nm** | | |
|---|---|---|---|---|---|---|---|---|---|---|
| | | **Spatial period range (nm)** | | | | | | **Spatial period range (nm)** | | |
| equal to or larger than | 1.0 | - | equal to or - smaller than | 2.5 | | larger than | 2.5 | - | equal to or smaller than | 1 mu |
| | | **RMS (nm)** | | | | | | **RMS (nm)** | | |
| equal to or larger than | 0.5 | - | equal to or smaller than | 20.0 | | equal to or larger than | 0.1 | - | equal to or smaller than | 5.0 |
| | | **RMS (nm) (variation)** | | | | | | **RMS (nm) (variation )** | | |
| equal to or larger than | 1.0 | - | equal to or than | smaller 10.0 | | equal to or larger than | 0.1 | - | equal to or smaller than | 2.5 |
| | | | | | | | | | | |

| **λ** | **13.5** | **nm** | | | | **λ** | **13.5** | **nm** | | |
|---|---|---|---|---|---|---|---|---|---|---|
| | | **Spatial period range (nm)** | | | | | | **Spatial period range (nm)** | | |
| equal to or larger than | 2.7 | - | equal to or smaller than | 6.75 | | larger than | 6.75 | - | equal to or smaller than | 1 mu |
| | | **RMS (nm)** | | | | | | **RMS (nm)** | | |
| equal to or larger than | 1.4 | - | equal to or smaller than | 54.0 | | equal to or larger than larger than | 0.27 | - | equal to or smaller than | 13.5 |
| | | **RMS (nm) (variation)** | | | | | | **RMS (nm) (variation)** | | |
| equal to or larger than | 2.7 | - | equal to or smaller than | 27.0 | | equal to or equate or larger than | 0.27 | - | equal to or smaller than | 6.75 |
| | | | | | | | | | | |

| **λ** | **20.0** | **nm** | | | | **λ** | **20.0** | **nm** | | |
|---|---|---|---|---|---|---|---|---|---|---|
| | | **Spatial period range (nm)** | | | | | | **Spatial period range (nm)** | | |
| equal to or larger than | 4.0 | - | equal to or smaller than | 10.0 | | larger than | 10.0 | - | equal to or smaller than | 1 mu |
| | | **RMS (nm)** | | | | | | **RMS (nm)** | | |
| equal to or larger than | 2.0 | - | equal to or equal to or than | 80.0 | | equal to or larger than | 0.4 | - | equal to or smaller than | 20.0 |
| | | **RMS (nm) (variation)** | | | | | | **RMS (nm) (variation)** | | |
| equal to or larger than | 4.0 | - | equal to or smaller than | 40.0 | | equal to or larger than | 0.4 | - | equal to or smaller than | 10.0 |

For spatial periods larger than about 6.75 nm and equal or smaller than about 1 µm, the rms roughness is in this embodiment equal to or larger than about 0.1 nm and equal to or smaller than about 5.0 nm. In a variation, one may provide a rms roughness equal to or larger than about 0.1 nm and equal to or smaller than about 2.5 nm for spatial periods larger than about 6.75 nm and equal or smaller than about 1 µm

While specific embodiments of the invention have been described above, it will be appreciated that the invention may be practised otherwise than as described. The description is not intended to limit the invention. Further, some of the embodiments especially describe EUV applications and EUV optical elements. However, the invention can also be applied to optical elements for other spectral ranges, like e.g. UV or VIS. Further, the drawings usually only comprise the important elements and features that are necessary to understand the invention. The invention is not limited to those elements, shown in the schematic drawings. For example, more layers can present than shown.

## Claims

1. An optical element for EUV radiation of a wavelength λ between 5nm and 20nm, comprising:
- a layer that is at least partially transmissive for EUV radiation at said wavelength λ , and
- a top layer transmissive for EUV radiation at said wavelength λ comprising a structure having a rms roughness value, **characterised in that** the structure has a rms roughness value equal to or larger than λ/10 for spatial periods in the range from λ/5 to λ/2.

2. Optical element according to claim 1, wherein the structure of the transmissive top layer has a rms roughness equal to or smaller than λ for spatial periods in the range from λ/2 to 1 µm.

3. Optical element according to one of the preceding claims, wherein the transmissive top layer comprises a material selected from at least one of Be, B, C, Si, P, S, K, Ca, Sc, Br, Rb, Sr, Y, Zr, Nb, Mo, Ru, Rh, Ag, Ba, La, Ce, Pr, Au, Pa and U.

4. Optical element according to one of the preceding claims, wherein the transmissive top layer and the structure comprise Ru.

5. Optical element according to one of the preceding claims, wherein the optical element comprises a mirror, having a mirroring surface, wherein the mirroring surface comprises one or more protrusions transmissive for EUV radiation of said wavelength λ and wherein at least part of the mirroring surface further comprises the transmissive top layer comprising the structure.

6. Optical element according to one of the preceding claims, with at least one surface comprising a profile having height differences, thereby providing cavities and elevations having a predetermined maximum height difference, wherein the optical element further comprises a substantially flat transmissive layer in the cavities and on the elevations of the optical element, and wherein the optical element further comprises the transmissive top layer comprising the structure according to one of claims 1-5.

7. Optical element according to one of the preceding claims, wherein the rms roughness value of the transmissive top layer is 2 nm or larger for spatial periods equal to or smaller than λ/2.

8. Optical element according to one of the preceding claims, wherein the optical element comprises one or more selected of the group consisting of optical filters, optical gratings, mirrors and lenses.

9. Optical element according to one of the preceding claims, wherein the optical element comprises a mirror with a mirroring surface, with a tilted multi-layer stack which is tilted with respect to the mirroring surface.

10. Lithographic apparatus comprising one or more optical elements according to one of the preceding claims.

11. A device manufacturing method comprising the steps of:
- providing a substrate;
- providing a projection beam of radiation using an illumination system;
- using patterning means to impart the projection beam with a pattern in its cross-section;
- projecting the patterned beam of radiation onto a target portion of the substrate, and
- providing one or more optical elements according to one of claims 1-10.

## Patentansprüche

1. Ein optisches Element für EUV-Strahlung von einer Wellenlänge λ zwischen 5 nm und 20 nm, das Folgendes beinhaltet:
- eine Schicht, die mindestens teilweise gegenüber EUV-Strahlung mit der Wellenlänge λ durchlässig ist, und
- eine Oberschicht, die gegenüber EUV-Strahlung mit der Wellenlänge λ durchlässig ist, die eine Struktur mit einem quadratischen Mittelrauwert beinhaltet, **dadurch gekennzeichnet, dass** die Struktur für räumliche Perioden in dem Bereich von λ/5 bis λ/2 einen quadratischen Mittelrauwert aufweist, der gleich oder größer als λ/10 ist.

2. Optisches Element gemäß Anspruch 1, wobei die Struktur der durchlässigen Oberschicht für räumliche Perioden in dem Bereich von λ/2 bis 1 µm einen quadratischen Mittelrauwert aufweist, der gleich oder kleiner als λ ist.

3. Optisches Element gemäß einem der vorhergehenden Ansprüche, wobei die durchlässige Oberschicht ein Material beinhaltet, das aus mindestens einem von Be, B, C, Si, P, S, K, Ca, Sc, Br, Rb, Sr, Y, Zr, Nb, Mo, Ru, Rh, Ag, Ba, La, Ce, Pr, Au, Pa und U ausgewählt ist.

4. Optisches Element gemäß einem der vorhergehenden Ansprüche, wobei die durchlässige Oberschicht und die Struktur Ru beinhalten.

5. Optisches Element gemäß einem der vorhergehenden Ansprüche, wobei das optische Element einen Spiegel mit einer spiegelnden Oberfläche beinhaltet, wobei die spiegelnde Oberfläche einen oder mehrere Vorsprünge beinhaltet, die gegenüber EUV-Strahlung der Wellenlänge λ durchlässig sind, und wobei mindestens ein Teil der spiegelnden Oberfläche ferner die durchlässige Oberschicht beinhaltet, welche die Struktur beinhaltet.

6. Optisches Element gemäß einem der vorhergehenden Ansprüche mit mindestens einer Oberfläche, die ein Profil mit Höhenunterschieden beinhaltet, wodurch Aussparungen und Erhebungen mit einem zuvor festgelegten maximalen Höhenunterschied bereitgestellt werden, wobei das optische Element ferner eine im Wesentlichen flache durchlässige Schicht in den Aussparungen und auf den Erhebungen des optischen Elements beinhaltet und wobei das optische Element ferner die durchlässige Oberschicht beinhaltet, welche die Struktur gemäß einem der Ansprüche 1-5 beinhaltet.

7. Optisches Element gemäß einem der vorhergehenden Ansprüche, wobei der quadratische Mittelrauwert der durchlässigen Oberschicht für räumliche Perioden, die gleich oder kleiner als λ/2 sind, 2 nm oder größer ist.

8. Optisches Element gemäß einem der vorhergehenden Ansprüche, wobei das optische Element eins oder mehrere, die aus der Gruppe, bestehend aus optischen Filtern, optischen Gittern, Spiegeln und Linsen, ausgewählt sind, beinhaltet.

9. Optisches Element gemäß einem der vorhergehenden Ansprüche, wobei das optische Element einen Spiegel mit einer spiegelnden Oberfläche beinhaltet, mit einem geneigten vielschichtigen Stapel, der in Bezug auf die spiegelnde Oberfläche geneigt ist.

10. Ein lithographischer Apparat, der ein oder mehrere optische Elemente gemäß einem der vorhergehenden Ansprüche beinhaltet.

11. Ein Verfahren zum Herstellen einer Vorrichtung, das die folgenden Schritte beinhaltet:
- Bereitstellen eines Substrats;
- Bereitstellen eines Projektionsstrahls aus Strahlung unter Verwendung eines Beleuchtungssystems;
- Verwenden eines Musteraufbringungsmittels, um den Projektionsstrahl in seinem Querschnitt mit einem Muster zu versehen;
- Projizieren des gemusterten Strahls aus Strahlung auf einen Zielabschnitt des Substrats und
- Bereitstellen eines oder mehrerer optischer Elemente gemäß einem der Ansprüche 1-10.

## Revendications

1. Un élément optique destiné au rayonnement EUV d'une longueur d'onde λ comprise entre 5 nm et 20 nm, comprenant :
- une couche qui transmet au moins partiellement le rayonnement EUV à ladite longueur d'onde λ, et
- une couche de dessus qui transmet le rayonnement EUV à ladite longueur d'onde λ et qui comprend une structure ayant une valeur de rugosité rms, **caractérisée en ce que** la structure a une valeur de rugosité rms égale ou supérieure à λ/10 pour des périodes spatiales comprises dans la gamme allant de λ/5 à λ/2.

2. Elément optique selon la revendication 1, où la structure de la couche de dessus transmissive a une rugosité rms égale ou inférieure à λ pour des périodes spatiales comprises dans la gamme allant de λ/2 à 1 µm.

3. Elément optique selon l'une des revendications précédentes, où la couche de dessus transmissive comprend un matériau sélectionné parmi au moins un élément d'entre Be, B, C, Si, P, S, K, Ca, Sc, Br, Rb, Sr, Y, Zr, Nb, Mo, Ru, Rh, Ag, Ba, La, Ce, Pr, Au, Pa et U.

4. Elément optique selon l'une des revendications précédentes, où la couche de dessus transmissive et la structure comprennent du Ru.

5. Elément optique selon l'une des revendications précédentes, où l'élément optique comprend un miroir, présentant une surface à effet miroir, où la surface à effet miroir comprend une ou plusieurs saillies qui transmettent le rayonnement EUV de ladite longueur d'onde λ, et où au moins une partie de la surface à effet miroir comprend en outre la couche de dessus transmissive qui comprend la structure.

6. Elément optique selon l'une des revendications précédentes, possédant au moins une surface qui comprend un profil ayant des différences de hauteur, fournissant de ce fait des cavités et des éminences ayant une différence de hauteur maximum prédéterminée, où l'élément optique comprend en outre une couche transmissive substantiellement plate dans les cavités et sur les éminences de l'élément optique, et où l'élément optique comprend de plus la couche de dessus transmissive qui comprend la structure selon l'une des revendications 1 à 5.

7. Elément optique selon l'une des revendications précédentes, où la valeur de rugosité rms de la couche de dessus transmissive est de 2 nm ou plus pour des périodes spatiales égales ou inférieures à λ/2.

8. Elément optique selon l'une des revendications précédentes, où l'élément optique comprend un élément ou plus sélectionné dans le groupe consistant en filtres optiques, réseaux optiques, miroirs et lentilles.

9. Elément optique selon l'une des revendications précédentes, où l'élément optique comprend un miroir possédant une surface à effet miroir, avec un empilement multicouche incliné qui est incliné par rapport à la surface à effet miroir.

10. Appareil lithographique comprenant un ou plusieurs éléments optiques selon l'une des revendications précédentes.

11. Un procédé de fabrication de dispositif comprenant les étapes de:
- fournir un substrat ;
- fournir un faisceau de projection de rayonnement à l'aide d'un système d'illumination ;
- utiliser un moyen de formation de motif pour conférer au faisceau de projection un motif dans sa coupe transversale ;
- projeter le faisceau de rayonnement conformé sur une portion cible du substrat, et
- fournir un ou plusieurs éléments optiques selon l'une des revendications 1 à 10.
